# EUROPEAN PATENT APPLICATION

(11) **EP 4 152 233 A1**
(43) Date of publication of application: **22.03.2023**
(21) Application number: 22167469.0
(22) Date of filing: 08.04.2022
(51) Int. Cl.: G06Q 20/16, G06Q 20/32, G06Q 20/40, G06Q 20/42

(54) **SECURING CARD PAYMENT TRANSACTIONS MADE BY TELEPHONE**

(30) Priority: 16.09.2021 GB 202113268
(71) Applicant: Encoded Ltd., Gatwick, West Sussex RH6 0LG (GB)
(72) Inventor: Crutchington, Robert, Gatwick, RH6 0LG (GB); Bromage-Hughes, Adam, Gatwick, RH6 0LG (GB)
(74) Representative: Barker Brettell LLP

(57) **Abstract**

A computer implemented method (200) for securing card payment transactions made via telephone. The method (200) comprising: receiving (202) payment card data associated with a card payment transaction initiated by a cardholder (102) via a telephone call; obtaining (204) one or more additional data fields for which corresponding additional information is required for securing the transaction, the additional information being information not included with the received payment card data; obtaining (206) device information of a user device (110) associated with the cardholder (102); generating (208) customised webpage content associated with the transaction based on the additional information, the webpage content including one or more data retrieval mechanisms to be included in a webpage, the data retrieval mechanisms being configured to retrieve the additional information; sending (210) a link, by which the webpage can be accessed, to the user device (110) using the device information; receiving (212) additional information from the user device (110) obtained via the one or more data retrieval mechanisms; and attempting (214) to perform the card payment transaction using the payment card data and the received additional information. Also disclosed is a transaction system (100) for securing card payment transactions, and a computer program product.

## Description

### Technical field

The present application relates to a computer implemented method and system for securing card payment transactions made via telephone. More specifically, the present application relates to improving the security of Mail-Order/Telephone-Order (MOTO) payments that are initiated by a cardholder over the telephone.

### Background

Mail-Order/Telephone-Order (MOTO) payments are a type of Card-Not-Present (CNP) card payment transaction where the authenticity of the cardholder cannot easily be determined. Such card payment transactions are performed by obtaining card information from the cardholder over a mobile or landline telephone call. As the details are received over the phone, the card holder is not physically present at the point of sale. This means that such transactions are more liable to fraud attempts, for example using stolen payment cards or card details. Moreover, the use of a telephone line to provide card information places technical limitations on the security processes that can be implemented to improve security and reduce the risk of fraud. For example, known Strong Customer Authentication methods such as 3-D Secure cannot be implemented for telephone payments because of the technical limitations of the security protocols that can be used solely over a phone line. Because of this inability to authenticate that the cardholder is who they claim to be, card payments made via telephone can experience both a high degree of fraud and of false-positive rejection of the transaction by the authorising payment gateway. This is inconvenient for the person seeking to make the payment as well as for the merchant receiving the payment, and results in wasted computer and network resources required to attempt numerous transactions that are often rejected, and may result in the cardholder making multiple attempts.

GB2553857 discloses a method of data transfer for a financial transaction between a customer and a company in which a customer wishing to place an order with a company by telephone calls the company. The method comprises: receiving order details from an order generator (a company) and generating a unique order transfer code relating to an order placed by a customer. The transfer code is received by the customer and then sent back to the order generator to verify and accept the transfer of a payment over a network communication if the received transfer code matches the original transfer code. If the transfer code is accepted then the customer is forwarded to a payment platform to complete the transaction. Using this method, the person to be billed can be confident that their data is secure as at no time during the process is a disclosure of secure information to an unsecured party (such as the company) required. The company does not need to record or store the sensitive information itself nor was it entered into the secure order transfer system, but the person to be billed enters their confidential payment information only into a familiar prior art payment gateway.

Despite these known methods, further improvements in security and usability are desirable. Specifically, the known methods described above alter the payment channel from a telephone-based MOTO payment to an e-commerce payment completed via an internet communications device. This method may not be desirable to merchants if, as an example, the telephone call is taking place within a sales environment, where losing the customer from the telephone call may result in a lost sale. A general problem to be addressed therefore is how to improve the security of card payment transactions made by telephone, whilst ensuring that the card holder can complete the transaction as a telephone-based MOTO payment and remain on the telephone throughout the transaction and once it has completed.

### Summary

In a first aspect, the present application provides a computer implemented method for securing card payment transactions made via telephone, comprising any one or more of the following steps:
receiving payment card data associated with a card payment transaction initiated by a cardholder via a telephone call;
obtaining one or more additional data fields for which corresponding additional information is required for securing the transaction;
obtaining device information of a user device associated with the cardholder;
generating a customised webpage content associated with the transaction based on the additional information, the webpage including one or more data retrieval mechanisms configured to retrieve the additional information;
sending a link, by which the webpage can be accessed, to the user device using the device information;
receiving additional information from the user device obtained via the one or more data retrieval mechanisms; and
attempting to perform the card payment transaction using the payment card data and the received additional information.

The method for securing card payment transactions of the present application involves determining that additional information is required from the cardholder in order to verify the identity of the cardholder and secure the transaction, and provides a method for securely obtaining that information. The method therefore solves the problem of securing a telephone transaction for which limited security technologies are directly available. The solution provided by the method of the present application involves sending a request for additional information associated with the transaction and the cardholder to a user device associated with the cardholder. A customised webpage associated with the cardholder is generated, which includes data retrieval mechanisms that can be operated to retrieve the required additional information for use in performing the transaction. The webpage is accessed by the cardholder via a link sent to the user device. The present method therefore securely and conveniently acquires additional information that can be used to verify the identity of the cardholder and secure the transaction, when information is only otherwise received by telephone. This may have a number of advantages, including providing greater transaction security, reducing fraud, reducing the number of transactions which are rejected, and reducing the need for the user to repeat transaction attempts if they fail.

The method of the present application may solve problems associated with the technical constraints on how information can be obtained via a telephone call. For example, information transmitted over a telephone channel may be restricted to information conveyed by voice or using a touch-tone entry. This type of data entry may be slow and inaccurate. This may lead to longer telephone calls, transaction fraud, or repeated attempts being required for a transaction to be authorised where information is incomplete or not received accurately. The present method solves the problems of the technical constraints of obtaining information by telephone by creating the customised webpage content which includes data retrieval mechanisms. This allows authentication information to be obtained through data communication protocols (such as HTTP) that are not available over a telephone channel. The data retrieval mechanisms therefore provide other technical means for data to be provided by the user (via a user device associated with them) to support the information already provided over the telephone channel. This allows a complete dataset needed to authenticate a transaction to be obtained efficiently, accurately and securely.

The additional information may be related to the transaction and may be information not included with the received payment card data. The method allows this information to be obtained using means different from the telephone connection.

The one or more additional data fields may be obtained based on a confidence level of the payment card data. If the confidence level of the payment card data does not meet a threshold requirement, one or more additional data fields corresponding to additional information may be identified such that, if obtained, the confidence threshold would be met. This may allow required additional information to be determined.

The method may further comprise: calculating a confidence level based on the payment card data; comparing the confidence level to a predefined confidence threshold; if the confidence level is equal to or above the threshold, attempting to perform the card payment transaction without the additional information; and if the confidence level is below the threshold, obtaining the additional data fields by identifying additional information that if combined with the payment card data would result in the confidence level being equal to or above the threshold. This allows additional information to be identified by comparison of the information already available to a confidence threshold.

The additional information corresponding to each of the one or more additional data fields may be associated with a verification strength factor. The verification strength factor may indicate the level of verification that is required for the additional information being obtained.

Generating the customised webpage content may comprise: matching the verification strength factor with one or more available data retrieval mechanisms; and selecting one or more data retrieval mechanisms according to the matching. This may allow the data retrieval mechanism(s) included in the webpage to be chosen so that they have a required level of verification (e.g. equal to or greater than that of the verification strength factor of the associated additional information). For example, some data retrieval mechanisms may be able to acquire information with a greater level of verification, e.g. that provides a stronger authentication of the cardholder.

Generating the customised webpage content may further comprise: matching a device type associated with the user device with the one or more available retrieval mechanisms; and selecting one or more data retrieval mechanisms according to the matching. The device type may indicate the type of device being used by the cardholder. The device type may be included with, or determined from, the device information. This may allow the data retrieval mechanism to be chosen so that it can be implemented by the user device, or which can make use of functionality only available on some devices (e.g. applications such as banking apps available on a smartphone).

The link may be sent by a method or technology chosen according to the device information. This may allow the link to be sent to different types of device. For example, if the device information includes a telephone number, the link may be sent via an SMS message. The link may therefore be sent according to the device type.

Generating the customised webpage content may comprise determining at least two data retrieval mechanisms. The webpage may be configured accordingly to: display a list of the data retrieval mechanisms and associated additional information which each of the data retrieval mechanisms are capable of retrieving; and activate one of the data retrieval mechanisms based on a user selection. This may allow the user to choose an appropriate data retrieval mechanism. The user may provide the selection using a user interface of the user device.

The webpage may be configured to automatically initiate one or more of the data retrieval mechanisms upon opening of the webpage by the user device. The data retrieval mechanisms may be activated without any user input.

The telephone call may remain active when sending the link to the user device and receiving the additional information from the user device. The telephone link or session with the cardholder may therefore remain connected at least until the transaction is either approved or declined.

The method may further comprise sending a prompt to the user device to inform the cardholder that the data request has been sent, that they should not disconnect the telephone call while completing the data request, and should return to the telephone call when the data request is complete.

The device information may be obtained using one or more of:
a) supplementary data received from the user alongside the payment card data;
b) supplementary data associated with the user retrieved by the telephone system; and/or
c) a telephone number of the telephone used by the cardholder to contact the telephone system.

The supplementary data is different from the additional information obtained via the user device as it is already known by the transaction system performing the method (e.g. already stored or provided by the user over the telephone connection).

The one or more data retrieval mechanisms may be configured to:
i) obtain the additional information by accessing an application run by on the user device;
ii) obtain the additional information by accessing a third party website at which the cardholder has a registered account;
iii) obtain the additional information by accessing a social media account to which the cardholder has secure access; and/or
iv) obtain a One-Time PIN or password that has been sent to the user device.

The data retrieval mechanisms included in the customised web page may be configured to obtain additional information by performing a process run at the user device associated with the cardholder. The data retrieval mechanisms may allow additional information to be obtained using methods not available over the telephone connection with the cardholder.

In a second aspect, the present application provides a transaction system for securing card payment transactions made via telephone, the system comprising a telephone system and a data request web system, wherein the transaction system is configured to perform any one or more of the following functions:
receive payment card data by the telephone system via a telephone call, the payment card data associated with a card payment transaction;
obtain one or more additional data fields for which corresponding additional information is required for securing the transaction;
obtain device information of a user device associated with the cardholder by the telephone system;
generate customised webpage content by the web system, the webpage being associated with the transaction, and generated based on the required additional information, the webpage including one or more data retrieval mechanisms configured to retrieve the required additional information;
send a link, by the telephone system, by which the webpage can be accessed, to the user device associated with the cardholder using the device information;
receive additional information by the data request web system from the user device obtained via the one or more data retrieval mechanisms;
attempt to perform the card payment transaction using the payment card data and the received additional information.

The one or more additional data fields may be obtained based on a confidence level of the payment card data. If the confidence level is not met, one or more additional data fields corresponding to additional information may be identified such that, if obtained, the confidence level would be met.

The system may further comprise a risk assessment system. The risk assessment system may be configured to: calculate a confidence level based on the payment card data provided by the telephone module; compare the confidence level to a predefined confidence threshold; and if the confidence level is below the threshold, determine the one or more additional data fields by determining additional information that if combined with the payment card data would result in the confidence level being equal to or above the threshold.

The additional information corresponding to each of the one or more additional data fields may be associated with a verification strength factor.

The data request web system may be further configured to: match the verification strength factor of the additional information required with one or more data available retrieval mechanisms; and select one or more data retrieval mechanisms according to the matching.

The data request web system may be further configured to: match a device type associated with the user device with the one or more available retrieval mechanisms; and select one or more data retrieval mechanisms according to the matching.

The data request system may be configured to determine at least two data retrieval mechanisms. The webpage may be configured accordingly to: display a list of the data retrieval mechanisms and associated additional information which each of the data retrieval mechanisms are capable of retrieving; and activate one of the data retrieval mechanisms based on a user selection.

The webpage may be configured to automatically initiate one or more of the data retrieval mechanisms upon opening of the webpage by the user device.

The telephone system may be configured to maintain the telephone call when sending the link to the user device and receiving the additional information from the user device.

The telephone system may be further configured to send a prompt to the user device to inform the user that the data request has been sent, that they should not disconnect the telephone call while completing the data request, and should return to the telephone call when the data request is complete.

The telephone system may be configured to obtain the device information using one or more of:
a) supplementary data received from the user alongside the payment card data;
b) supplementary data associated with the user retrieved by the telephone system; and/or
c) a telephone number of the telephone used by the cardholder to contact the telephone system.

The one or more data retrieval mechanisms may be configured to:
i) obtain the additional information by accessing an application run by on the user device;
ii) obtain the additional information by accessing a third party website at which the cardholder has a registered account;
iii) obtain the additional information by accessing a social media account to which the cardholder has secure access; and/or
iv) obtain a One-Time PIN or password that has been sent to the user device.

In a third aspect, the present application provides a system comprising one or more processors and one or more computer readable storage media storing computer readable instructions that, when executed by the one or more processors, cause the system to perform the method of the first aspect (or as defined or claimed anywhere herein).

In a third aspect, the present application provides a computer program product, or non-transitory computer readable medium, comprising instructions which, when the program is executed by a computer, cause the computer to carry out the method of the first aspect (or as defined or claimed anywhere herein).

The skilled person will appreciate that except where mutually exclusive, a feature described in relation to any one of the above aspects may be applied to any other aspect.

### Brief Description of the Drawings

Embodiments of the invention will now be described, by way of example only, with reference to the accompanying drawings:
**Figure 1** shows a schematic illustration of a system for securing card payment transactions;
**Figure 2** shows a method of securing card payment transactions which may be performed by the system of Figure 1;
**Figure 3** shows a process flow chart illustrating further details of a method of securing card payment transactions which may be performed by the system of Figure 1; and
**Figure 4** shows a schematic illustration of a computing device on which any of the methods and functions, or any part thereof, disclosed in the present application may be implemented.

### Detailed Description

Embodiments of the present application are directed to devices, systems and methods for securing card payment transactions made via telephone. Payments made via telephone are an example of a Mail-Order/Telephone-Order (MOTO) payment. This is a type of Card-Not-Present (CNP) transaction where the authenticity of the person initiating the transaction (the cardholder) cannot be easily determined as they are not physically present at the point of sale.

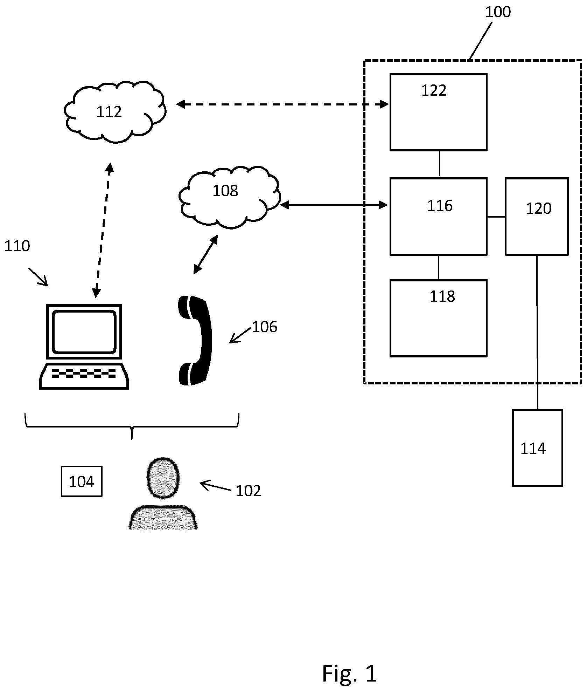

A system 100 for securing card payment transactions (referred to as a transaction system herein) is illustrated in Figure 1. The system 100 is in communication with a cardholder 102 who wishes to make a card payment transaction using a payment device 104. The payment device 104 may be any suitable portable consumer device issued by an entity such as a bank, including payment cards such as credit or debit cards, along with other devices such as cellular phones, PDAs etc which can store account information associated with an account held by the cardholder from which a payment is to be made. By cardholder we therefore mean a holder of an account from which payment is made, even if they do so without using the physical payment card itself, and so may be referred to as an account holder.

The transaction system 100 is configured for communication with the cardholder 102 using a telephone 106 via a telephone connection. The cardholder 102 is therefore a caller who places or receives a telephone call (using known techniques) in order to initiate a MOTO transaction. The telephone call may be implemented using a telephone network 108. Any suitable telephone network may be used which includes one or more telephone exchanges to allow a call to or from the system 100 to be made, including a landline phone network or cellular phone network. The telephone call may also be made using other technologies such as voice over wireless LAN. The telephone call may include a voice portion and/or a touch-tone (DTMF portion).

The cardholder 102 is associated with a user device 110 that is also in communication with the transaction system 100. The user device 110 may be any suitable terminal device associated with the cardholder 102, and may be a portable electronic communications device such as a smartphone, tablet computer, laptop computer or PDA, or may be a non-portable device such as a desktop computer. The user device 110 is in communication with the transaction system 100 using a communications network 112. The communications network 112 may facilitate various forms of communication between the user device and the network including email, text message (SMS), instant messaging etc. The communications network may include one or a mixture of wired and wireless communication networks, including, for example, a telephone network, WiFi^{™}, LAN, WAN (including the internet or enterprise networks), Bluetooth^{™}, GSM, CDMA, 3G, 4G, or other wired or wireless data or communication protocol. As will be discussed in more detail later, the connection between the transaction system 100 and user device 110 allows a link or data request to be sent from the transaction system 100 to the user device.

In the embodiment illustrated in Figure 1, the user device 110 is separate from the telephone 106 which the cardholder uses to make a telephone call to the transaction system 100. In other embodiments, the cardholder may use a single device to interact with the transaction system 100. For example, the user device 110 may be a smart phone which the cardholder uses to both make a telephone call to the transaction system 100, and also receive a data request and access a webpage hosted by the transaction system 100 in order to provide additional information for the transaction as will be described later.

In order to carry out a payment, the transaction system 100 is in communication with a bank/acquirer 114 via which the transaction can be authorised. The transaction is authorised by the bank/acquirer based on information provided by the transaction system 100 according to known methods.

In the embodiment shown in Figure 1, the transaction system 100 generally comprises a telephone system/module 116, a risk system/module 118, a payment system/module 120, and a data request web system/module 122. The terms "module" and "system" may be used interchangeably herein.

The telephone system 116 comprises a system accessible via a mobile or landline telephone so that a phone call can be made to or received from the cardholder 102. This may be a fully automated system, known in the art as an IVR, or an agent assisted system used by contact centres to accept payment card data from a cardholder without the payment card data being verbally supplied to the contact centre agent. Information may be supplied to the telephone system 116 either via the touch-tone keypad (DTMF) of the telephone being used by the cardholder, or spoken audibly (voice). The telephone system 116 connects to the telephone network 108 in order to receive phone calls from cardholders. The person calling or being called by the telephone system 116 is referred to herein as a caller. The cardholder 102 is therefore defined herein as a caller to the telephone system who wishes to make a card payment transaction.

The telephone system 116 may be configured to implement one or more telephone sessions, each associated with a telephone call from a cardholder. A telephone session is an instance of a caller accessing the telephone system. The telephone session is created at the start of the call being connected, and is deleted once the call has ended, either by the caller or by the telephone system 116. The telephone session may stay connected until a decision as to whether the transaction is authorised in provided.

The risk system 118 is configured to provide a determination as to whether additional information (i.e. in addition to already received payment card data) is to be obtained via the user device in order to support the transaction. Whether additional information is needed may be determined based on a risk factor calculated from the payment card data. The risk system 118 therefore comprises a system which is supplied with data relating to a current, pending or future payment transaction. The risk system 118 is configured to assess risk based on the data provided, and make an automated decision on whether additional information is required in order to reach a preconfigured confidence threshold for the payment transaction, as will be described in more detail later.

If the risk system 118 assesses that the risk has fallen below the confidence threshold, the system will additionally determine what additional information may be required, and may further include the verification strength of the data. The data verification strength may indicate whether the data is simply required to be provided by the cardholder, or whether the data is required to be verified through a process that guarantees the validity of the data (such as external verification via a third-party, twofactor authentication, etc).

The risk system 118 may be configured to create an additional data session (ADS) associated with each transaction. An additional data session may be created by the risk system 118 when additional information is required in order to reach the preconfigured confidence threshold as will be described in more detail later. The additional data session is configured to hold information related to the additional information to be acquired (e.g. the required data fields to be completed), and optionally the verification strength of the data, and the actual data once provided by the cardholder.

The payment system 120 comprises a system which is supplied with payment card data (and optionally supplementary data) received from the cardholder. It may initiate a card payment transaction against an underlying payment gateway, acquirer, or any other system capable of performing a card payment transaction as would be known by the skilled person.

The payment system 120 may be configured to implement one or more payment sessions associated with each transaction being processed. A payment session is initiated by the payment system 120 for the purpose of securely storing payment card data, along with supplementary data if provided, and along with the payment card data provided to the payment system. Each payment session instance created by the payment system 120 may be uniquely identifiable via a Payment Session ID. The payment session may be ended once either the telephone session to which it is linked has been ended, or a card payment transaction has been attempted for that payment session.

The data request web system 122 is configured to generate a customised webpage associated with each transaction via which additional information to support the transaction can be obtained. The data request web system 122 may operate on a web application server and may be accessible via a unique link (e.g. a unique URL web link) which contains an identifier for the additional data session for each transaction. The web system 122 may be configured to retrieve the appropriate data from the additional data session, (and optionally the type of the user device accessing the system), and generate customised and unique web pages that guide a cardholder through the process of supplying the additional information specifically required for their transaction via appropriate data retrieval mechanisms. Further details of the data retrieval mechanisms which can be implemented by the present system are discussed later.

The telephone system 116 may be configured to send a data request to the user device 110 in order to acquire the additional information to support the transaction. The data request may include the unique link sent to the user device 110. It may be linked or associated with the additional data session for a respective transaction. The data request is for the purpose of requesting the additional information from the cardholder so as to support the transaction. The unique link may expire as soon as the associated telephone session is ended.

The modules/systems forming the transaction system 100 illustrated in Figure 1 are to be understood as illustrative only. In other embodiments, the modules/systems can be implemented using one or more server/computer systems, each with one or more processors and memory storing computer readable instructions. In other embodiments, any one or more of the modules/systems forming the transaction system 100 may be combined e.g. they may be implemented using the same computer system, or functions allocated differently between modules/systems.

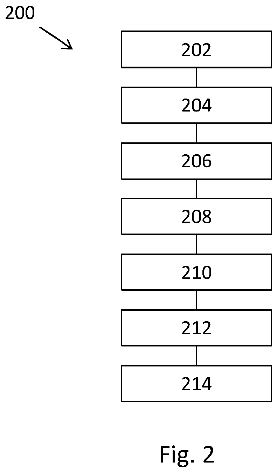

Figure 2 illustrates an embodiment of a method 200 of securing card payment transactions made via telephone. The method may be performed by the transaction system 100 illustrated in Figure 1, or any other system, computer device(s) or apparatus(es) described herein.

The method 200 comprises receiving 202 payment card data associated with a card payment transaction initiated by the cardholder 102 via a telephone call. The payment card data is received by the telephone system 120 via the telephone network 108. Before the payment card data are received the method 200 may therefore comprise making and/or receiving and connecting a phone call to or from the cardholder 102 for the purposes of making a MOTO card payment transaction. The phone call may be initiated by the cardholder 102, or by the transaction system 100. A telephone session may be started by the system 100 at the start of a call being connected.

The payment card data may include various information required to process a card payment. For example, this may include the primary account number (PAN) provided on the payment card, expiration date, security code etc. The payment card data may be received by the transaction system 100 (e.g. at the telephone system 120) using touch-tone or voice inputs from the cardholder.

Further data may be received by the telephone system 120 from the cardholder alongside the payment card data via the telephone connection. For example, the cardholder may have supplied unique data, or a unique combination of data, for the purposes of identification and verification, in order to retrieve and use additional "supplementary data". Such unique data may be separate from the payment card information, and may include data such as additional supporting information. This may include data such as a date of birth or post code to identify and verify the cardholder with the transaction system 100. The further data received may be used to obtain supplementary data related to the cardholder and/or the cardholders account.

Once the payment card information has been received, the method 200 may comprise starting a payment session by the transaction system 100. The payment session may hold the payment card data received from the cardholder, along with any supplementary data received or otherwise obtained. A new payment session is started for each transaction being processed, and may be associated with the respective transaction using a payment session ID. In the present embodiment, the payment session is created by the payment system 120. The telephone module 116 may communicate with the payment system 120 to provide the received payment card data (and supplementary data) so that it can be held in the payment session. The payment session ID may be generated by the payment module 120 and returned to the telephone module 116 so that the payment session can be identified and the information it holds accessed.

The method 200 further comprises obtaining 204 one or more additional data fields for which corresponding additional data items (referred to as "additional information herein") are required for securing the transaction. In other words, the method comprises identifying additional information related to the transaction that is to be acquired. The "additional data fields" may correspond to information that is not included with the received payment card data, and is required for securing the transaction. Identifying the additional information may include determining information fields which are to be completed with data items or values acquired via the user device 110. By "obtaining additional data fields", we mean identifying the type of information that is required, e.g. a cardholder, name address or other information such as a one-time PIN or password, rather than determining the information itself.

The additional data fields may be obtained by determining the completeness of the payment card data in order to identify further data that is required. This may be done by comparison of the payment card data with a risk threshold by the risk module 118 as will be described later. In other embodiments, other factors may be used to identify additional information required to ensure the security of the transaction, for example specific predefined additional information may be required by the party authorising the transaction. This information may therefore vary between transactions if they are associated with a different merchant. The method 200 may therefore operate in a first mode in which the additional data fields are obtained according to transaction or cardholder specific factors e.g. by assessing (e.g. via a risk system) what information is required against what is already available for that transaction.

The method 200 may comprise creating an additional data session (ADS). The ADS may hold data items related to the required additional data fields as will be described in more detail later. An ADS identifier may be created in order to identify the ADS as belonging to the current transaction. In some embodiments, the one or more additional data fields may include only a single additional data field to be completed for each transaction. In other embodiments, there may be a plurality of additional data fields for each transaction so that a range of different types of information are acquired.

In other embodiments, the method may operate in a second mode of operation in which obtaining the one or more additional data fields may comprise obtaining one or more predefined data fields (e.g. from a memory of the transaction system 100). In this embodiment, certain specific information may then be acquired for all transactions as defined by the stored additional data fields. For example, the method may comprise acquiring a cardholder name and address for all transactions.

In some embodiments, the first and second modes of operation may be combined such that specific additional information is acquired for all transaction, with other information identified by comparison to a risk factor or other method specific to the transaction.

In the method illustrated in Figure 2, the transaction system 100 proceeds to identify one or more additional data fields for all transactions which it processes. This mode of operation ensures that all card payment transaction attempts are protected by the security processes of the present application.

In other embodiments, the method 200 may comprise operating in a third mode of operation in which a step preceding the identification step 204 is included, in which a determination is made as to whether additional information should be identified and obtained, or whether the transaction can proceed (at least at first) without it. For example, in some embodiments, the method 200 comprises performing a first processing of the transaction using the received payment card data (and other any other information received via the telephone session between the cardholder and the system) without obtaining additional information via the user device 110 to complete additional data fields. Before doing so, the transaction system 100 may determine whether the transaction is being performed for a first time in order to determine whether additional information is to be identified. If the first transaction attempt is declined, the method 200 continues with the step 204 of obtaining additional data fields (e.g. using the first or second modes of operation) and the following steps shown in Figure 2.

The method may therefore operate in one or more of three different modes of operation, including: the first mode in which it assess what information is required against what is already available; the second mode in which certain additional information is always requested; and the third mode in which a transaction is performed first and, if declined, the method falls back to the first or second mode.

Once additional information to be obtained has been identified by obtaining the one or additional data fields, the method 200 comprises obtaining 206 device information of a user device 110 associated with the cardholder. This may be done by the telephone system 116 after an indication that additional information is required is received, along with an ADS ID, from the risk system 118. The user device 110 is a device via which the additional information corresponding to the additional data fields can be obtained, and may be any suitable electronic device as discussed above in connection with Figure 1. The method 200 may further comprise sending an informational prompt to the cardholder (e.g. a voice message over the phone call, or SMS message sent to the telephone from which the call is being made) to inform them that additional information is required to proceed with the card payment transaction. The cardholder may therefore be informed that the additional information will be retrieved via a suitable device available to them.

The device information may include a device identifier comprising information using which the device can be contacted (i.e. a message sent to the device). This may include a mobile telephone number or email address. The device information may be obtained by the system using a number of different methods as will be described later. The device information may further comprise a device type identifier, or allow a device type to be determined. The device type may define the type of device that is being used, e.g. whether it is a smartphone, or if it is a computing device such as a laptop or computer. The device type may be inferred from the device information e.g. a telephone number being provided may indicate that the device type is a smartphone.

In order to obtain the additional information needed to complete the relevant additional data fields, the method 200 comprises generating 208 customised webpage content (i.e. generating a webpage) via which the information is retrieved. The webpage content is associated with the transaction being processed, and generated based on the one or more additional data fields. This allows it to be a customised page unique to the current transaction, and which additional information is to be obtained. In the present embodiment, the webpage content is generated and the webpage built by the data request web system 122. The webpage includes one or more data retrieval mechanisms (DRMs) configured to retrieve the additional information, and is generated by the transaction system 100 as will be described later.

The method further comprises sending 210 a link (e.g. a URL link) by which the webpage can be accessed to the user device associated with the cardholder using the device information. This allows the cardholder to be provided with an alternative means, separate from the phone call, with which the additional information can be provided to support the transaction authentication. The method may comprise generating a data request which includes the link, and the data request being sent to the user device. The data request links the telephone session, payment session and additional data session with the device information (i.e. the device identifier). Generating the data request may comprise generating a unique URL link (a data request URL) that directs a web browser to the customised webpage generated for the transaction for the purpose of retrieving the additional information from the cardholder. The link may connect directly to the customised webpage, or may include a unique identifier by which it can be found.

Sending the data request (including the URL link) to the user device is performed via a suitable method for the device identifier. For example, a device identifier of a mobile telephone number may result in an SMS message being sent to a user device 119 which is a phone. An email address may result in an email being sent to an email account associated with the cardholder which is accessed by a smart phone, laptop or other computing device associated with the cardholder. The link may be generated by the data request web system 112 and sent as appropriate according to the device type associated with or included in the device identifier (e.g. using the telephone system 116 if it is an SMS message).

The method 200 may further comprise a step of sending an informational prompt by the transaction system 100 to the cardholder. The informational prompt may be sent to the device from which the telephone call is conducted (which may be the user device in some embodiments, or a separate telephone device). The informational prompt may inform the cardholder that the data request has been sent to their device. It may further prompt the cardholder to stay on the call whilst completing the data request, and return to the call once the data request is complete. The informational prompt may be sent by the telephone module e.g. over the respective telephone session with the cardholder.

The telephone session may therefore stay connected while the additional information is being obtained via the user device 110. Once the data request has been sent to the user device 110 the telephone call may be paused by the telephone module while the additional information is obtained.

Referring again to Figure 2, the method further comprises receiving 212 additional information from the user device 110 obtained via the one or more data retrieval mechanisms. Once the data request is received at the user device 110, the cardholder may follow the link (e.g. using a web browser) such that the webpage is accessed and displayed on a display of the user device 110. The webpage may be accessed by a web browser according to known methods. The data retrieval mechanism(s) may at this point be further customised by information pertaining to the type of device used. For example, a smartphone may have access to apps that a desktop computer may not have access to, and therefore data retrieval mechanism(s) which required apps may not be displayed on a desktop computer device. The data retrieval mechanisms included in the webpage may therefore be selected or determined according to the type of user device. The data retrieval mechanism(s) included in the webpage may be activated automatically upon opening of the web page, or by user selection, so that the additional information can be obtained.

Following the completion of the DRM process(s), the user device 110 sends the information retrieved back to the transaction system 100. This may be done in a number of ways, for example using a data network connection between the transaction system 100 and the user device 110 (e.g. network 112). Receiving the additional information may further comprise receiving an identifier for the respective additional data session, and optionally an indicator indicating whether the DRM process was successful and, if successful, the additional information data. The additional information data may be received at the data request web system 122 which may then update the additional data session with the retrieved additional information. If there is outstanding additional information identified in step 204 that has not been received, the method may return to the step of generating the web page content so that further information can be obtained using further DRMs. For example, a different DRM may be selected if the first failed to acquire the additional information needed to support the transaction. In other embodiments, the method may continue without checking that no information is outstanding.

If all additional information has been provided (e.g. the additional data fields obtained in step 204 have been completed), the system 100 will update the payment session with all additional information held within the additional data session. This may be done by the web system 112. An indicator may be generated to indicate that the additional data session is complete, and sent to the telephone module 116. Additionally, a web page may also be displayed to inform the cardholder to return to the call so that they can continue with the telephone session.

Once the request is received by the telephone module from the data request system, the telephone system will then continue with the transaction. An informational prompt indicating that the additional information has been received may be generated and sent to the cardholder via the telephone connection, and to indicate that the card payment transaction will be attempted.

The method 200 further comprises the step of attempting 214 to perform the card payment transaction using the payment card data, the received additional information (and any supplementary data provided) to the acquirer or bank. The payment can then proceed to be processed by being accepted or declined according to known methods. In the present embodiment, this is done by the telephone system 116 sending a request to the payment system 120 along with an identifier of the payment session. The payment system 120 will then attempt the card payment transaction with the payment card data, any supplementary data if provided or otherwise obtained, and the additional information by contacting the acquirer 114. A confirmation that the transaction has been competed may be returned by the payment system 120. A final step of sending a message to the cardholder (e.g. by the telephone module 116) may be performed to confirm the transaction has been completed.

The transaction processing method of the present application allows a customised webpage to be displayed to the cardholder which is specific to the transaction being processed, and allows additional information or data to be obtained in order to support the transaction. By using the customised webpage and DRM mechanisms at the cardholder device further information can be obtained that is not otherwise available. For example, because of the technical limitations of how information can be obtained via the telephone session with the telephone system, and the security processes that can be implanted using the telephone sessions, the information available at the telephone system may be limited. By providing additional information to support the transaction the security of the transaction can be improved and the identity of the cardholder can be further verified. This may protect the merchant from fraudulent payments. Moreover, it may reduce the number of failed attempts to authorise transactions resulting from a lack of supporting security information. This may avoid the transaction system needing to make multiple failed attempts at a transaction, thus avoid wasting computer processing order to process failed transactions and the associated wasted network traffic.

The data retrieval mechanisms included in the customised web page are configured to obtain additional information by performing a process run at the user device associated with the cardholder. Any of the data retrieval mechanisms may take advantage of external mechanisms available to it on the user device to both retrieve and optionally verify the request data. They may therefore access information stored at another secure source, rather than asking for the cardholder to enter it directly.

In some embodiments, multiple pieces of data may be retrieved via a single data retrieval mechanism. The types of DRM mechanism that may be included in the webpage may be chosen from any one or more of:
i) *Application DRM:* A DRM may be configured to access a (local) application on the user device in order to obtain the additional information corresponding to the one or more additional data fields. Such an application type DRM may be configured to access a software application run by or on the user device in order to obtain additional information. The application accessed may be one in which cardholder information is stored or which has access to such information, and so can verify the identity of the cardholder. The cardholder identity may be verified using known methods such as a password entry or biometric authentication to allow access to the application. For example, the application may be a banking application (e.g. a smart phone or tablet app or the like) associated with the cardholder, and via which the cardholder can be securely verified. The application may be accessed using the Open Banking technology known in the art which may allow third party access to information stored by, or available to, a banking application. Using the application DRM the cardholder's mobile banking app may be opened and their verified information, such as a name and address requested. In other embodiments, the application type DRM may be configured to access other applications installed locally or which can be operated by the user device apart from a banking app, and may allow other types of additional information to be obtained. This may include social media applications or any other application for which suitable information is available.
ii) *Website access DRM:* A DRM may be configured to access a website (i.e. belonging to a third party) in order to obtain the additional information corresponding to the one or more additional data fields. The website may be one which the cardholder has a registered account. The identity of the cardholder can therefore be verified by the cardholder logging into their account (e.g. by entering a user name and password or biometric information). Once the cardholder has logged into their account, the data retrieval mechanism may access account information in order to obtain the required additional information to support the transaction. In one example, the website may be a government website (e.g. the gov.uk website provided by the UK government) with which the cardholder may have a verified account. The data retrieval mechanism may then be able to access information such as the cardholder's verified name and address. This is however only one example, and the data retrieval mechanism may access any suitable website for which the user has an account.
iii) *Social media DRM:* A DRM may be configured to access information associated with a social media account to which the cardholder has secure access in order to complete the corresponding one or more additional data fields. Using this mechanism the cardholder may be requested to log into a social media account (such as Google, Facebook, Instagram etc) and their verified information (e.g. name and address) requested by the DRM. The social media DRM may be configured to access a cardholder's social media account via prompting the cardholder to login via the social media internet site, or via a social media application operating on the user device.
iv) *One-time Pin DRM:* A DRM may be configured to send a one-time pin or password to the user device. This may be done via an SMS or the like. This may then be input to the transaction system 100 by the user or otherwise obtained by the DRM and returned to the web system 120. In some embodiments, the one-time PIN DRM may be implemented using the EMV 3D Secure protocol. In other embodiments, the One-time Pin DRM may be configured to obtain a one-time PIN or password provided by the user from a separate PIN generator rather than being sent to the user device.

The data retrieval mechanisms may be configured to access information from third party websites or applications using the OAuth open standard for secure delegated access to server resources. The data retrieval mechanisms may in other embodiments be implemented using an Open Banking AIS implementation, or EMV 3D Secure.

The present application is not limited to the DRMs listed above, and others may be used in other embodiments. While in the various embodiments described herein the additional information obtained to support the transaction is the cardholder's name and address other "additional information" or "additional data" may be requested according to the relevant additional data fields for the transaction. This may include, for example, account numbers, etc.

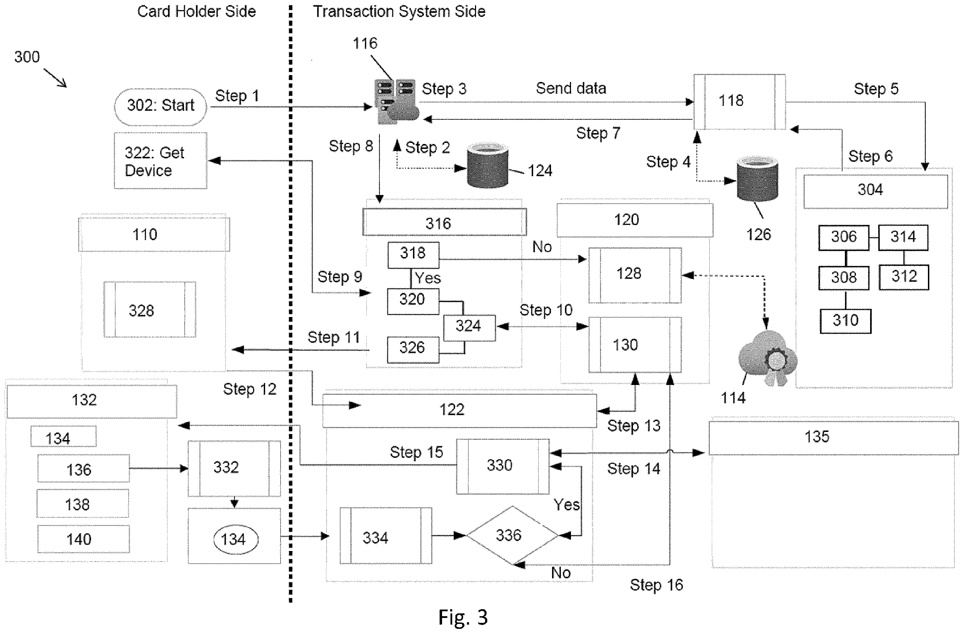

Figure 3 illustrates an embodiment of the method 200 described above in further detail. In Figure 3 a process flow chart 300 is shown to illustrate method steps being carried out either at the cardholder side (e.g. by the telephone 106 or user device 110) and at the transaction system side (e.g. steps performed by various components of the system 100 for securing card payment transactions). The steps performed at the card holder side are shown left of the dashed dividing line, and the steps performed at the transaction system side are shown to the right of the dashed dividing line. Corresponding reference numbers to those of Figure 1 have been used for common components. Anything described above in connection with Figure 1 or Figure 2 can be used in combination with the process shown in Figure 3, and vice versa. For example, any feature discussed in relation to Figure 3 can be used separately in the method of Figure 2, and vice versa.

The processing of a transaction begins at the process start 302 (Step 1) shown in Figure 3 in which a request is received at the telephone system 116 from the cardholder. As discussed above, this includes receiving the payment card data required for the transaction, along with any supplementary data that is received from the cardholder or obtained from a database 124 in communication with the telephone system in Step 2. This may include the supplementary data described above. The supplementary data may be any other data that is available to the transaction system. An example may be in a situation where a customer has called a payee (e.g. their utility company) to make a payment against an outstanding balance on their account. In this example, the customer may provide a unique account number, and perhaps an additional piece of supporting information, such as a date of birth or postcode, to identify and verify themselves with the telephone system. The telephone system may then use this information to access supplementary data related to this customer and/or the customer's account. In this example, this may be the customer's name and address, outstanding balance, etc. The supplementary data is different from the additional information obtained via the user device as it is already known by the transaction system, and cannot be verified in the same way.

Once data is received at the telephone system 116, the process 300 comprises obtaining one or more additional data fields corresponding to additional information or data that is required for securing the transaction as described above (i.e. method step 204 in Figure 2). In order to obtain the additional data fields, the transaction process 300 comprises sending data to the risk system 118 (Step 3) at which a risk process 304 is performed in order to determine further information that is to be acquired from the user device.

In the example shown in Figure 3, the additional data fields are determined based on a comparison of the information already received (e.g. the payment card data, and optionally any supplementary data) with a risk threshold. In Step 3 data associated with the transaction is therefore communicated to the risk system 118 so that risk process 304 can be performed. In the presently described embodiment, the data is sent directly from the telephone system 116. In other embodiments, the data contained in the payment session may be communicated to the risk module 118 (either directly from the telephone system, 116, or via communicating the payment session ID to the risk system 118 which can then be used by the risk system to obtain data from the payment session held by the payment 120). Further data may be provided to the risk system 118 in Step 4 from a merchant configuration database 126 in communication with, or provided at, the risk system 118.

The process 300 comprises performing a risk sub-process 304 to determine the additional information to be acquired (Step 5 of Figure 3). The risk module 118 is configured to make an automated decision on whether the transaction can proceed or if further information should be acquired from the user device based on the data and information it receives.

The step of obtaining the additional data fields 204 of Figure 2 may therefore comprise the risk process 304 illustrated in Figure 3. The risk process 304 comprises calculating 306 a confidence level based on the payment card data. The confidence level is then compared 308 to a predefined confidence threshold. If the confidence level is equal to or above the predefined confidence threshold, the card payment transaction may be performed without the additional information being obtained. The card payment may therefore be attempted without any additional information being acquired by the telephone system if the risk processes returns a result indicating that it is not required.

If the confidence level is below the threshold, required additional information is determined 310 such that if it were combined with the payment card data it would result in the confidence level being equal to or above the threshold. The additional data field(s) therefore correspond to additional information that is required for the confidence threshold to be met. The additional data session (ADS) may be created if the confidence level is below the threshold. The ADS may hold the data related to the required additional data field(s), and their associated data verification strength requirements, as calculated by the risk system. The risk system may then respond to the telephone system 116 with an identifier to indicate that additional information is required, along with the ADS ID associated with the instance of the ADS for the respective transaction.

The predefined risk threshold may be chosen according to a merchant associated with the transaction being processed. In the described embodiment, the risk process 304 further comprises determining the predefined risk threshold according to a Merchant Identifier (MID) for the transaction. The risk process illustrated in Figure 3 comprises loading 312 or otherwise obtaining configuration data for the transaction, which may include the Merchant Identifier. The addition of the Merchant Identifier allows for different risk profiles to be used for different merchants. For example, a first Merchant may be offering high-value one-off purchases of physical items with a high level of fraud risk, which will require a high confidence threshold to be met. A second Merchant may be offering low-value subscriptions for digital-only items, with a low level of fraud risk, which will require a lower confidence threshold to be met. A different risk threshold may be used for each of the different merchants as defined by the Merchant Identifier. Loading the configuration data 312 may therefore comprise obtaining a suitable confidence threshold which, in the present embodiment, is chosen according to the Merchant Identifier.

Before calculating the confidence level, a step of checking 314 the supplied data is provided. In this step a check is performed to determine if the supplied data is sufficient to satisfy the risk process. In some embodiments, this step may be absent. While the Merchant Identifier is used in the present embodiment, the threshold may be determined according to other factors in other embodiments. The step of obtaining the Merchant Identifier may therefore be absent in some embodiments, or the configuration loading step 312 involve obtaining the predefined threshold using other methods. For example, the threshold may not be varied according to the respective merchant, but the same threshold used for all transactions.

The risk process 304 returns a result that includes a decision as to whether additional information is required. It further returns the data fields corresponding to the additional information identified to be acquired via the user device (e.g. the additional information fields which are required to be completed by acquiring information from the user device). In the present example, the additional information that is to be acquired is the card holder name and address.

The result of the risk process 304 is obtained by the risk system 118 at Step 6 of the transaction process 300. The risk system 118 is configured to communicate the result to the telephone system 116 at Step 6.

Once the result of the risk process is received at the telephone system 116, the telephone system 116 is configured to perform the process 316 shown in Figure 3. As discussed above, a determination 318 is made as to whether additional information related to the transaction is to be acquired before the transaction can continue. This determination can be based on the risk sub-process result returned by the risk system. If the result is that no further information is required, the transaction process 300 comprises attempting to perform the card payment transaction using the information already available (e.g. the received payment card data and any already available supplementary data). The attempt to perform the card payment transaction is performed via a payment gateway 128 at the payment system 120. The payment gateway 128 is configured to communicate with the Bank/Acquirer 114 according to known methods in order to attempt to authorise the transaction.

If the result of the determination 318 is that there are additional information requirements, the telephone system 116 is arranged to obtain device information of a user device associated with the cardholder as described in connection with step 206 of Figure 2. The device information may be obtained by the telephone system 116 by any one or more of:
(a) the device information (e.g. Device Identifier) may be obtained from the supplementary data as provided by the card holder or accessed by the telephone system. This allows for a scenario where the user device associated with the cardholder is pre-registered with the transaction system 100 e.g. pre-registered with the Merchant, as identified by the Merchant ID;
(b) the device information may be obtained by using the telephone number being used to access the telephone system (e.g. the phone number of the phone which the cardholder uses to provide the payment card data). The telephone number can be determined by the telephone system by detecting the number from which the cardholder is calling. The telephone number detected may then be used as the Device Identifier; and/or
(c) the device information may be obtained via an input from the cardholder. In this case, the telephone system is configured to send a prompt to the cardholder to request they provide the device information. The telephone system may then receive a telephone number input by the cardholder e.g. via a touch tone keypad. The mobile telephone number provided may then be used as the Device Identifier.

These steps may be performed at process step 320 shown in Figure 3, with the device information being obtained 322 from the cardholder at Step 9 if required.

In some embodiments, the telephone system 116 is configured to operate in a first device identification mode in which the device information (e.g. the Device Identifier) is determined only from the supplementary data. In this mode of operation, the telephone system 116 is configured to send a prompt to the cardholder (e.g. via the telephone connection or to the user device) to inform them of the Device Identifier which will be used to retrieve the additional information to support the transaction.

In other embodiments, the telephone system 116 is configured to operate in a second device identification mode in which the device information (e.g. the Device Identifier) is determined from the supplementary data (similarly to the first mode) or from the telephone number used by the cardholder to access the telephone system.

If device information is available via options (a) and/or (b) above, the telephone system 116 is configured to send a request to the cardholder (e.g. via the telephone connection or to the user device) to confirm the available device information can be used. If a positive result of the request is received, the indicated device information will be used.

If no device information is available, or no cardholder confirmation is received, the process 300 may comprise a step of directly obtaining the device information from the cardholder (process 322 in Figure 3). This may be done by requesting that it is input by the cardholder (e.g. as per option (c) above). This is shown as Step 9 in Figure 3.

Once suitable device information has been obtained, the transaction process 300 comprises creating 324 a payment session 130 at Step 10 in Figure 3. The payment session 130 is created at the payment system 120 as described above. A separate payment session instance is created for each transaction according to information associated with that transaction (e.g. payment card data, supplementary information etc.).

Continuing to refer to Figure 3, the transaction process 300 further comprises generating 326 a link and sending the link to the user device 110 at Step 11. The link may be a URL link as described above, and may allow the user device to access the customised webpage 132 generated by the web system 122 via which the additional information is to be obtained. The link/trigger is received 328 at the user device 110.

The transaction process 300 further comprises steps for generating content for the customised webpage 132 corresponding to step 208 shown in Figure 2. In the presently described embodiment, the webpage 132 is generated by the web system 122 after receiving device type information and/or a session ID from the device at Step 12. In other embodiments, the customised webpage 132 may be generated before the step of generating the link which is sent to the user device (e.g. as shown in Figure 2).

The web system 122 is configured to perform a build page process 330 in which the webpage 132 is generated. The web system 112 is configured to obtain one or more DRMs which are to be included in the customised webpage content so that the additional information for the transaction can be acquired from the user device. In the embodiment shown in Figure 3, the data retrieval mechanisms are accessed from a DRM catalogue 135 which is provided remotely from the web system 122. In other embodiments, the DRM catalogue 135 may be stored locally at the web system 122.

The one or more data retrieval mechanisms for the transaction may be chosen by the web system 120 according to the additional information identified as being required to support the transaction. The data retrieval mechanisms may therefore be chosen according to the information that is to be acquired (e.g. according to the additional data fields), and are chosen such that they are specific to the current transaction being processed. This allows a customised or unique web page to be generated for the transaction via which the appropriate additional information can be obtained.

The webpage content (and hence the webpage) may be generated according to one or more factors based on which DRMs are determined, such that information can be acquired. These factors may include any one or more of: outstanding additional information required, associated verification factors, available DRMs configured within the web system, and information related to the device (e.g. device type). For example, the DRM(s) may be chosen according to whether the user device is a laptop or smartphone so that an appropriate application can be selected to be accessed by the DRM.

Before generating the web page 132, the web system 120 may be configured to determine whether the linked additional data session has ended, either by the payment session or telephone session being ended. If the additional data session has ended, the web system 120 may be configured to generate a webpage to be displayed to the cardholder indicating the data request is cancelled.

The additional information associated with each of the additional data fields may be associated with a verification strength factor. The verification strength factor may relate to the degree of authentication that is required for the additional information being obtained, with a suitable DRM then being chosen accordingly. For example, some DRMs may be associated with a greater degree of verification strength e.g. information obtained via a secure application running at the user device such as a mobile banking app may be associated with a greater verification strength compared to information obtained using other methods.

In order to generate the customised webpage content, the transaction process 300 may further comprise: matching the additional information and the associated verification strength factor with one or more available data retrieval mechanisms; and selecting one or more data retrieval mechanisms according to the matching. The verification strength factor may be stored in the additional data session in association with each data item to be acquired. Similarly, the DRMs available in the DRM catalogue may be stored with an associated verification strength factor which can be matched to a specific data item.

The customised webpage content may be further generated based on the type of device the cardholder will be using to provide the additional information. For example, not all types of DRM may be able to run on all types of device. Some of the DRMs available in the catalogue 134 may not therefore be suitable for all transactions. The transaction process therefore may comprise matching a device type associated with the user device with the one or more available data retrieval mechanisms; and selecting one or more data retrieval mechanisms according to the matching. The device type may, for example, determine whether the device is a smart phone, laptop or desktop computer.

Generating the customised web page 132 may comprise determining at least two data retrieval mechanisms to be included in the respective page content. Where there are multiple data retrieval mechanisms to be included, the webpage may be configured accordingly to: display a list of the data retrieval mechanisms and associated additional information which each of the data retrieval mechanisms are capable of retrieving; and activate one of the data retrieval mechanisms based on a user selection. This may allow the user to select a suitable DRM from a list using an input at the user device 110.

In some embodiments, the webpage 132 may be configured to automatically initiate one or more of the data retrieval mechanisms upon its opening by the user device 110. For example, if only a single DRM is included in the webpage, it may be automatically initiated when the page is accessed or loaded. If a single DRM is available that cannot be automatically initiated, the webpage may be configured to display the available DRM (and optionally the information it is capable of retrieving) and a prompt requesting the cardholder approve its use. The DRM is configured to activate upon receipt of a corresponding cardholder input.

Referring again to Figure 3, the webpage 132 is configured in the present embodiment to display the type of additional information 134 that is needed. In this example, the additional information required is the cardholder name and address. The webpage 132 in this example further displays three DRM options 136, 138, 140 for the user to make a selection from. In the present example, the DRMs displayed are an Open Banking application to perform an Account Information Service (AIS) request DRM 136, government website verification DRM 138 and a social media DRM 140. The user provides a user input to the webpage 132 via the user device 110 (e.g. via a touch screen or other user interface) in order to select the DRM to be activated. In the present example, the open banking DRM 136 is selected and the DRM activated resulting in the opening 332 of a banking application at the user device. The cardholder name and address information is available at the banking application, and is communicated to the web system 122.

The web system 122 is configured to listen 334 for information received from the DRM after it has been run at the user device 110. The web system 122 may therefore comprise one or more listener modules each associated with a corresponding DRM so receive information from the user device 110.

Once additional information 134 is received, the transaction process 300 comprises determining 336 whether all of the required additional information has been received, or whether additional information is outstanding. If information is outstanding, the transaction process 300 returns to the step of generating 330 the webpage content so that further information can be received. If it is determined that all of the required additional information has been received and none is outstanding (the result of the determination at step 336 is "no"), the transaction process 300 comprises attempting to perform the transaction (e.g. corresponding to step 214 in the method shown in Figure 2). In the presently described embodiment, the additional information once received is provided to the payment session 130 in Step 16. The transaction can then be attempted via the payment gateway 128 using the additional information and the originally provided payment card information (and any supplementary data accessed by the telephone system or provided to it). The transaction may be authorised using known methods, and if successful a prompt may be sent to the cardholder (either via the user device 110 or telephone session) to indicate that the transaction has been successful.

The skilled person will understand that the apparatus and system embodiments described herein are exemplary. Modules and systems described as individual components may not be physically separate from one another, and may be located at a single location or may be distributed between several networked components. In some embodiments, the functionality of the modules/systems described herein may be divided differently between the modules/systems, or other modules/systems provided to perform any of the functions described herein.

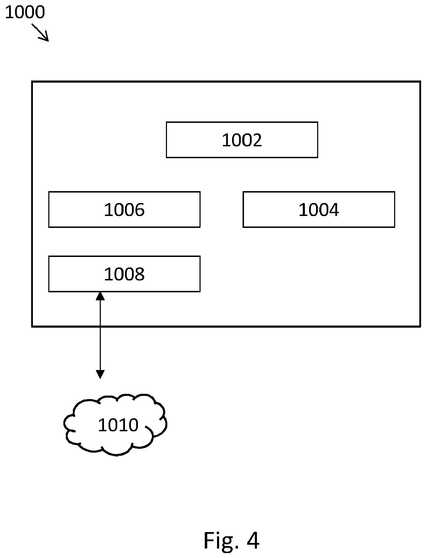

The modules, systems and method steps described herein may be implemented in software executed by a processor, hardware or a combination of the two. In some embodiments, the modules, systems and method steps described herein may be implemented by one or more computing devices. Such a computing device 1000 is illustrated in Figure 4, which includes one or more processors 1002, network interfaces 1008, input/output interfaces 1004 and memory 1006. The processors may be provided as part of a processing unit which may be provided with one or more Intel^{®} X86 processors such as an 15, 17 processor or the like. The memory may include computer or machine readable memory forming a computer/machine readable medium. The network interfaces may be configured for communication via any suitable network 1010 including a telephone network (e.g. in order to receive the cardholder phone calls of the present application), local area network or wide area networks such as the Internet or enterprise network. The skilled person will appreciate that the memory may be provided by a variety of components including a volatile memory, a hard drive, a non-volatile memory, etc.

The memory may store a set of computer readable instructions, data structures, program modules or other data. The computer-readable media may not include temporary computer readable media (transitory media), such as a modulated data signal and a carrier wave.

In one aspect of the present application, there is provided a machine/computer readable medium or computer program product containing instructions which, when read by a machine or computer, cause any of the transaction processing methods, or parts thereof, described or claimed herein to be performed.

The machine readable medium may be any of the following: a CDROM; a DVD ROM / RAM (including -R/-RW or +R/+RW); a hard drive; a memory (including a USB drive; an SD card; a compact flash card or the like); a transmitted signal (including an Internet download, ftp file transfer of the like); a wire; etc. The machine readable medium may be a non-transitory computer readable medium.

Various modifications will be apparent to the skilled person without departing form the scope of the claims. The embodiments described above should be understood as exemplary only. Any feature of any of the aspects or embodiments of the disclosure may be employed separately or in combination with any other feature of the same or different aspect or embodiment of the disclosure and the disclosure includes any feature or combination of features disclosed herein.

## Claims

1. A computer implemented method for securing card payment transactions made via telephone, comprising:
receiving payment card data associated with a card payment transaction initiated by a cardholder via a telephone call;
obtaining one or more additional data fields for which corresponding additional information is required for securing the transaction, the additional information being information not included with the received payment card data;
obtaining device information of a user device associated with the cardholder;
generating customised webpage content associated with the transaction based on the additional information, the webpage content including one or more data retrieval mechanisms to be included in a webpage, the data retrieval mechanisms being configured to retrieve the additional information;
sending a link, by which the webpage can be accessed, to the user device using the device information;
receiving additional information from the user device obtained via the one or more data retrieval mechanisms; and
attempting to perform the card payment transaction using the payment card data and the received additional information.

2. The method of claim 1, wherein the one or more additional data fields are obtained based on a confidence level of the payment card data, and optionally the method further comprises:
calculating a confidence level based on the payment card data;
comparing the confidence level to a predefined confidence threshold;
if the confidence level is equal to or above the threshold, attempting to perform the card payment transaction without the additional information; and
if the confidence level is below the threshold, obtaining the additional data fields by identifying additional information that if combined with the payment card data would result in the confidence level being equal to or above the threshold.

3. The method of claim 1 or claim 2, wherein the additional information corresponding to each of the one or more additional data fields is associated with a verification strength factor, and optionally:
wherein generating the customised webpage content comprises:
matching the verification strength factor with one or more available data retrieval mechanisms; and
selecting one or more data retrieval mechanisms according to the matching.

4. The method of any preceding claim, wherein generating the customised webpage content further comprises:
a) matching a device type associated with the user device with the one or more available retrieval mechanisms; and
selecting one or more data retrieval mechanisms according to the matching; and/or
b) determining at least two data retrieval mechanisms, and the webpage is configured accordingly to:
display a list of the data retrieval mechanisms and associated additional information which each of the data retrieval mechanisms are capable of retrieving; and
activate one of the data retrieval mechanisms based on a user selection.

5. The method of any preceding claim, wherein the webpage is configured to automatically initiate one or more of the data retrieval mechanisms upon opening of the webpage by the user device.

6. The method of any preceding claim, wherein the telephone call remains active when sending the link to the user device and receiving the additional information from the user device, and optionally wherein the method further comprises sending a prompt to the user device to inform the cardholder that the data request has been sent, that they should not disconnect the telephone call while completing the data request, and should return to the telephone call when the data request is complete.

7. The method of any preceding claim, wherein the device information is obtained using any one or more of:
a) supplementary data received from the user alongside the payment card data;
b) supplementary data associated with the user retrieved by the telephone system; and/or
c) a telephone number of the telephone used by the cardholder to contact the telephone system.

8. The method of any preceding claim, wherein the one or more data retrieval mechanisms are configured to:
i) obtain the additional information by accessing an application run by on the user device;
ii) obtain the additional information by accessing a third party website at which the cardholder has a registered account;
iii) obtain the additional information by accessing a social media account to which the cardholder has secure access; and/or
iv) obtain a One-Time PIN or password that has been sent to the user device.

9. A transaction system for securing card payment transactions made via telephone, the system comprising a telephone system and a data request web system, wherein the transaction system is configured to:
receive payment card data by the telephone system via a telephone call, the payment card data associated with a card payment transaction;
obtain one or more additional data fields for which corresponding additional information is required for securing the transaction, the additional information being information not included with the received payment card data;
obtain device information of a user device associated with the cardholder by the telephone system;
generate customised webpage content by the web system, the webpage content being associated with the transaction, and generated based on the required additional information, the webpage content including one or more data retrieval mechanisms to be included in a webpage, the data retrieval mechanisms being configured to retrieve the required additional information;
send a link, by the telephone system, by which the webpage can be accessed, to the user device associated with the cardholder using the device information;
receive additional information by the data request web system from the user device obtained via the one or more data retrieval mechanisms;
attempt to perform the card payment transaction using the payment card data and the received additional information.

10. The system of claim 9, wherein the one or more additional data fields are obtained based on a confidence level of the payment card data, and optionally:
wherein the system further comprises a risk assessment system configured to:
calculate a confidence level based on the payment card data provided by the telephone module;
compare the confidence level to a predefined confidence threshold; and
if the confidence level is below the threshold, determine the one or more additional data fields by determining additional information that if combined with the payment card data would result in the confidence level being equal to or above the threshold.

11. The system of claim 9 or claim 10, wherein the additional information corresponding to each of the one or more additional data fields is associated with a verification strength factor, and optionally: wherein the data request web system is further configured to:
match the verification strength factor of the additional information required with one or more data available retrieval mechanisms; and
select one or more data retrieval mechanisms according to the matching.

12. The system of any of claims 9 to 11, wherein any one or more of:
a) the data request web system is further configured to:
match a device type associated with the user device with the one or more available retrieval mechanisms; and
select one or more data retrieval mechanisms according to the matching;
b) the data request web system is configured to determine at least two data retrieval mechanisms, and the webpage is configured accordingly to:
display a list of the data retrieval mechanisms and associated additional information which each of the data retrieval mechanisms are capable of retrieving; and
activate one of the data retrieval mechanisms based on a user selection;
c) the webpage is configured to automatically initiate one or more of the data retrieval mechanisms upon opening of the webpage by the user device;
d) the telephone system is configured to maintain the telephone call when sending the link to the user device and receiving the additional information from the user device, and optionally is further configured to send a prompt to the user device to inform the user that the data request has been sent, that they should not disconnect the telephone call while completing the data request, and should return to the telephone call when the data request is complete; and/or
e) wherein the telephone system is configured to obtain the device information using any one or more of:
i) supplementary data received from the user alongside the payment card data;
ii) supplementary data associated with the user retrieved by the telephone system; and/or
iii) a telephone number of the telephone used by the cardholder to contact the telephone system.

13. The system of any of claims 9 to 12, wherein the one or more data retrieval mechanisms are configured to:
i) obtain the additional information by accessing an application run by on the user device;
ii) obtain the additional information by accessing a third party website at which the cardholder has a registered account;
iii) obtain the additional information by accessing a social media account to which the cardholder has secure access; and/or
iv) obtain a One-Time PIN or password that has been sent to the user device.

14. A system comprising one or more processors and one or more computer readable storage media storing computer readable instructions that, when executed by the one or more processors, cause the system to perform the method of any of claims 1 to 8.

15. A computer program product comprising instructions which, when the program is executed by a computer, cause the computer to carry out the method of any of claims 1 to 8.

## Amended claims

### Amended claims in accordance with Rule 137(2) EPC.

1. A computer implemented method (200; 300) for securing card payment transactions made via telephone, comprising:
receiving (202) payment card data associated with a card payment transaction initiated by a cardholder (102) via a telephone call;
obtaining (204) one or more additional data fields for which corresponding additional information is required for securing the transaction, the additional information being information not included with the received payment card data;
obtaining (206) device information of a user device (110) associated with the cardholder (102);
generating (208) customised webpage content associated with the transaction based on the additional information, the webpage content being specific to the card payment transaction being processed and including one or more data retrieval mechanisms (136, 138, 140) to be included in a webpage (132), the data retrieval mechanisms (136, 138, 140) being configured to retrieve the additional information;
sending (210) a link, by which the webpage (132) can be accessed, to the user device (110) using the device information;
receiving (212) additional information from the user device (110) obtained via the one or more data retrieval mechanisms (136, 138, 140); and
attempting (214) to perform the card payment transaction using the payment card data and the received additional information.

2. The method (200; 300) of claim 1, wherein the one or more additional data fields are obtained based on a confidence level of the payment card data, and optionally the method further comprises:
calculating (306) a confidence level based on the payment card data;
comparing (308) the confidence level to a predefined confidence threshold;
if the confidence level is equal to or above the threshold, attempting to perform the card payment transaction without the additional information; and
if the confidence level is below the threshold, obtaining (310) the additional data fields by identifying additional information that if combined with the payment card data would result in the confidence level being equal to or above the threshold.

3. The method (200; 300) of claim 1 or claim 2, wherein the additional information corresponding to each of the one or more additional data fields is associated with a verification strength factor, and optionally:
wherein generating (208) the customised webpage content comprises:
matching the verification strength factor with one or more available data retrieval mechanisms; and
selecting one or more data retrieval mechanisms (136, 138, 140) according to the matching.

4. The method (200; 300) of any preceding claim, wherein generating (208) the customised webpage content further comprises:
a) matching a device type associated with the user device (110) with the one or more available retrieval mechanisms; and
selecting one or more data retrieval mechanisms (136, 138, 140) according to the matching; and/or
b) determining at least two data retrieval mechanisms (136, 138, 140), and the webpage (132) is configured accordingly to:
display a list of the data retrieval mechanisms (136, 138, 140) and associated additional information which each of the data retrieval mechanisms (136, 138, 140) are capable of retrieving; and
activate one of the data retrieval mechanisms (136, 138, 40) based on a user selection.

5. The method (200; 300) of any preceding claim, wherein the webpage (132) is configured to automatically initiate one or more of the data retrieval mechanisms (136, 138, 140) upon opening of the webpage (132) by the user device (110).

6. The method (200; 300) of any preceding claim, wherein the telephone call remains active when sending the link to the user device (110) and receiving the additional information from the user device (110), and optionally wherein the method (200; 300) further comprises sending a prompt to the user device (110) to inform the cardholder (102) that the data request has been sent, that they should not disconnect the telephone call while completing the data request, and should return to the telephone call when the data request is complete.

7. The method (200; 300) of any preceding claim, wherein the device information is obtained using any one or more of:
a) supplementary data received from the user alongside the payment card data;
b) supplementary data associated with the user retrieved by the telephone system; and/or
c) a telephone number of the telephone used by the cardholder (102) to contact the telephone system.

8. The method (200; 300) of any preceding claim, wherein the one or more data retrieval mechanisms (136, 138, 140) are configured to:
i) obtain the additional information by accessing an application run by on the user device (110);
ii) obtain the additional information by accessing a third party website at which the cardholder (102) has a registered account;
iii) obtain the additional information by accessing a social media account to which the cardholder (102) has secure access; and/or
iv) obtain a One-Time PIN or password that has been sent to the user device (110).

9. A transaction system (100) for securing card payment transactions made via telephone, the system (100) comprising a telephone system (116) and a data request web system (122), wherein the transaction system (100) is configured to:
receive payment card data by the telephone system (116) via a telephone call, the payment card data associated with a card payment transaction;
obtain one or more additional data fields for which corresponding additional information is required for securing the transaction, the additional information being information not included with the received payment card data;
obtain device information of a user device (110) associated with the cardholder (102) by the telephone system (116);
generate customised webpage content by the web system (122), the webpage content being associated with the transaction, and generated based on the required additional information, the webpage content being specific to the card payment transaction being processed and including one or more data retrieval mechanisms (136, 138, 140) to be included in a webpage (132), the data retrieval mechanisms (136, 138, 140) being configured to retrieve the required additional information;
send a link, by the telephone system (116), by which the webpage (132) can be accessed, to the user device (110) associated with the cardholder (102) using the device information;
receive additional information by the data request web system (122) from the user device (110) obtained via the one or more data retrieval mechanisms (136, 138, 140);
attempt to perform the card payment transaction using the payment card data and the received additional information.

10. The system (100) of claim 9, wherein the one or more additional data fields are obtained based on a confidence level of the payment card data, and optionally:
wherein the system (100) further comprises a risk assessment system (118) configured to:
calculate a confidence level based on the payment card data provided by the telephone module;
compare the confidence level to a predefined confidence threshold; and
if the confidence level is below the threshold, determine the one or more additional data fields by determining additional information that if combined with the payment card data would result in the confidence level being equal to or above the threshold.

11. The system (100) of claim 9 or claim 10, wherein the additional information corresponding to each of the one or more additional data fields is associated with a verification strength factor, and optionally: wherein the data request web system (122) is further configured to:
match the verification strength factor of the additional information required with one or more data available retrieval mechanisms; and
select one or more data retrieval mechanisms (136, 138, 140) according to the matching.

12. The system (100) of any of claims 9 to 11, wherein any one or more of:
a) the data request web system (122) is further configured to:
match a device type associated with the user device (110) with the one or more available retrieval mechanisms; and
select one or more data retrieval mechanisms (136, 138, 140) according to the matching;
b) the data request web system (122) is configured to determine at least two data retrieval mechanisms (136, 138, 140), and the webpage (132) is configured accordingly to:
display a list of the data retrieval mechanisms (136, 138, 140) and associated additional information which each of the data retrieval mechanisms (136, 138, 140) are capable of retrieving; and
activate one of the data retrieval mechanisms (136, 138, 140) based on a user selection;
c) the webpage (110) is configured to automatically initiate one or more of the data retrieval mechanisms (136, 138, 140) upon opening of the webpage (132) by the user device (110);
d) the telephone system (116) is configured to maintain the telephone call when sending the link to the user device (110) and receiving the additional information from the user device (110), and optionally is further configured to send a prompt to the user device (110) to inform the user that the data request has been sent, that they should not disconnect the telephone call while completing the data request, and should return to the telephone call when the data request is complete; and/or
e) wherein the telephone system (116) is configured to obtain the device information using any one or more of:
i) supplementary data received from the user alongside the payment card data;
ii) supplementary data associated with the user retrieved by the telephone system; and/or
iii) a telephone number of the telephone used by the cardholder (102) to contact the telephone system (116).

13. The system (100) of any of claims 9 to 12, wherein the one or more data retrieval mechanisms (136, 138, 140) are configured to:
i) obtain the additional information by accessing an application run by on the user device (110);
ii) obtain the additional information by accessing a third party website at which the cardholder (102) has a registered account;
iii) obtain the additional information by accessing a social media account to which the cardholder (102) has secure access; and/or
iv) obtain a One-Time PIN or password that has been sent to the user device.

14. A system comprising one or more processors (1002) and one or more computer readable storage media (1006) storing computer readable instructions that, when executed by the one or more processors (1002), cause the system to perform the method of any of claims 1 to 8.

15. A computer program product comprising instructions which, when the program is executed by a computer, cause the computer to carry out the method of any of claims 1 to 8.
